# EUROPÄISCHE PATENTSCHRIFT

(11) **EP 2 974 897 B1**
(45) Veröffentlichungstag und Bekanntmachung des Hinweises auf die Patenterteilung: **01.11.2017**
(21) Anmeldenummer: 15170484.8
(22) Anmeldetag: 03.06.2015
(51) Int. Cl.: B60J 7/16, B60J 7/12, B60J 7/14, B60J 7/20

(54) **VERDECK**
HARD TOP
CAPOTE

(30) Priorität: 15.07.2014 DE 102014213730
(43) Veröffentlichungstag der Anmeldung: 20.01.2016
(73) Patentinhaber: Magna Car Top Systems GmbH, 74321 Bietigheim-Bissingen (DE)
(72) Erfinder: Kostadinov, Metodi, 74321 Bietigheim-Bissingen (DE); Mangold, Artur, 72172 Sulz-Mühlheim (DE); Röder, Holger, 73054 Eislingen (DE)
(74) Vertreter: Zangger, Bernd

(56) Entgegenhaltungen:
- WO-A1-2010/081002
- DE-A1- 10 020 663
- DE-A1-102005 004 018
- DE-A1-102009 008 545
- DE-B3- 10 340 017
- JP-A- 2003 106 045

## Beschreibung

### Gebiet der Erfindung

Die vorliegende Erfindung betrifft ein Verdeck für ein Cabriolet-Fahrzeug, wobei das Verdeck zumindest ein erstes Dachteil und ein Abdeckelement umfasst.

### Stand der Technik

Derartige Verdecke für Cabriolet-Fahrzeuge meist mehrere Dachteile, die heutzutage immer öfter als Hartschalenteile ausgebildet sind. Die Hartschalenteile werden durch Zwangssteuerungen, insbesondere durch Lenkergetriebe, mit der Karosserie des Fahrzeuges verbunden und sind durch diese öffenbar und schließbar. Die Hartschalenteile können üblicherweise beim Öffnen des Verdecks im Heck des Fahrzeuges in einem Verdeckablageraum abgelegt werden, der durch ein Abdeckelement, insbesondere einen Deckel, verschlossen wird. Das Abdeckelement wird üblicherweise durch eine weitere Zwangssteuerung vor dem Ablegen der Dachteile geöffnet und nach Ablage der Dachteile wieder geschlossen.

Ein solches Verdeck ist beispielsweise aus der EP 1 429 931 B2 bekannt, wobei ein vorderes, ein mittleres und ein hinteres Schalenteil verwendet wird und ein den Heckbereich des Cabriolet-Fahrzeuges zumindest teilweise überdeckendes und öffnungsfähiges Heckelement das hintere Schalenteil in einem geöffneten Verdeckzustand zumindest teilweise überdeckt.

Aus der WO 2010/081002 A1, die den nächstliegenden Stand der Technik bildet, ist eine Cabrio-Verdeckanordnung bekannt, die ein vorderes Plattenelement und ein hinteres Plattenelement umfasst.

Die Cabrio-Verdeckanordnung umfasst auch einen Hauptlagerbock der am Fahrzeug befestigt ist. Der Hauptlagerbock enthält einen nach vorne angeordneten Arm, der schwenkbar mit einem hinteren Rand des vorderen Plattenelements verbunden ist und einen nach hinten angeordneten Arm, der schwenkbar mit einem hinteren Rand des hinteren Plattenelements verbunden ist. Um das Verdeck zurückzuziehen, schwenkt die Heckklappe an einer Hinterkante längs einer ersten Schwenkachse, während eine Hinterkante der hinteren Platte um eine dritte Schwenkachse nach oben schwenkt.

Nachteilig an den bekannten Lösungen ist, dass diese komplex und teuer sind und die Öffnungs- und Schließzeiten lang sind, da die Bewegungen von Abdeckelementen und Dachteilen zeitlich versetzt stattfinden müssen.

### Zusammenfassung der Erfindung

Es ist eine Aufgabe der Erfindung, Verdecke für Cabriolet-Fahrzeuge der genannten Art in dieser Hinsicht zu verbessern und insbesondere Verdecke anzugeben, die einfacher gebaut sind und zudem ein rascheres Öffnen und Schließen des Verdecks erlauben.

Die Lösung der Aufgabe erfolgt durch ein Verdeck für ein Cabriolet-Fahrzeug mit Merkmalen gemäß Anspruch 1, wobei das Verdeck zumindest ein erstes Dachteil und ein Abdeckelement umfasst, wobei das erste Dachteil durch eine Dach-Zwangssteuerung öffenbar und schließbar ist und das Abdeckelement durch eine Abdeck-Zwangssteuerung öffenbar und schließbar ist,
wobei die Dach-Zwangssteuerung und die Abdeck-Zwangssteuerung durch ein Koppelelement miteinander gekoppelt sind, so dass die Dach-Zwangssteuerung und die Abdeck-Zwangssteuerung durch einen gemeinsamen Antrieb antreibbar sind.

Erfindungsgemäß werden die Zwangssteuerungen bzw. Kinematiken des Daches und des Abdeckelements, also insbesondere eines Deckels, durch ein koppelndes Element miteinander verbunden. Hierdurch können die Dachteile und das Abdeckelement eine einzige, gemeinsame Bewegung ausführen, wobei der Weg der Dachteile und jener des Abdeckelements derart aufeinander abgestimmt werden, dass die genannten Teile während einer Öffnungsbewegung und Schließbewegung nicht einander behindern.

Hierdurch kann ein einziger Antrieb für die gesamte Dach- und Deckel-Kinematik eingesetzt werden und somit ein zusätzlicher Antrieb eingespart werden. Die Bewegung sowohl der Dachteile als auch des Abdeckelements findet im Wesentlichen gleichzeitig statt, sodass das Öffnen und Schließen schneller erfolgen kann als mit anderen, sequentiell arbeitenden Verdecken.

Erfindungsgemäß sind die Dach-Zwangssteuerung und/oder die Abdeck-Zwangssteuerung dazu ausgebildet, dass das erste Dachteil und/oder das Abdeckelement beim Öffnen des Verdecks durch den gemeinsamen Antrieb zunächst einen ersten Öffnungsweg zurücklegen wobei das erste Dachteil und/oder das Abdeckelement angehoben werden, und daraufhin einen zweiten Öffnungsweg zurücklegen wobei das erste Dachteil und/oder das Abdeckelement abgesenkt werden. Besonders bevorzugt Vollführen beide Zwangssteuerungen eine derartige Bewegung bei der die Dachteile und das Abdeckelement angehoben und daraufhin wieder abgelegt werden. Die Dachteile werden selbstverständlich normalerweise an einer anderen Position wieder abgesenkt, nämlich üblicherweise in einen Verdeckablageraum.

Beim Schließen des Verdecks wird bevorzugt die selbe Bewegung in umgekehrter Reihenfolge ausgeführt. Die Dach-Zwangssteuerung und/oder die Abdeck-Zwangssteuerung sind daher bevorzugt so ausgebildet, dass das erste Dachteil und/oder das Abdeckelement beim Schließen des Verdecks durch den gemeinsamen Antrieb zunächst einen ersten Schließweg zurücklegen wobei das erste Dachteil und/oder das Abdeckelement angehoben werden, und daraufhin einen zweiten Schließweg zurücklegen wobei das erste Dachteil und/oder das Abdeckelement abgesenkt werden. Dabei entspricht der erste Schließweg dem zweiten Öffnungsweg in umgekehrter Richtung und der zweite Schließweg dem ersten Öffnungsweg in umgekehrter Richtung.

Die Abdeck-Zwangssteuerung umfasst erfindungsgemäß einen Abdeck-Zweischlaglenker, wobei der Abdeck-Zweischlaglenker beim Öffnen des Verdecks eine Strecklage durchläuft, wodurch der erste Öffnungsweg in den zweiten Öffnungsweg übergeht. Bei einer Öffnungsbewegung befindet sich demnach die gelenkige Verbindung im Mittelteil des Zweischlaglenkers zunächst auf einer Seite des Zweischlags, während es zum Anheben des Abdeckelements kommt. Daraufhin durchläuft der Zweischlaglenker eine Strecklage und befindet sich danach die gelenkige Verbindung auf der anderen Seite des Zweischlaglenkers, während das Abdeckelement wieder abgesenkt wird.

Bevorzugt umfasst die Dach-Zwangssteuerung einen Dach-Zweischlaglenker, wobei der Dach-Zweischlaglenker beim Öffnen des Verdecks eine Strecklage durchläuft, wodurch der erste Öffnungsweg in den zweiten Öffnungsweg übergeht. Die Dachkinematik nutzt dann ebenfalls einen ähnlichen Bewegungsablauf der für die Abdeckkinematik beschrieben wurde.

Bevorzugt sind der Abdeck-Zweischlaglenker und der Dach-Zweischlaglenker über das Koppelelement gelenkig miteinander verbunden.

Das Koppelelement kann insbesondere ein einfacher Lenker sein, also insbesondere eine an beiden Enden gelenkig verbundene Stange.

Bevorzugt durchlaufen beim Öffnen des Verdecks der Abdeck-Zweischlaglenker und der Dach-Zweischlaglenker ihre jeweilige Strecklage etwa gleichzeitig. Die Strecklagen können jedoch auch beispielsweise einen geringen zeitlichen Versatz aufweisen, so dass beispielsweise das Abdeckelement noch weiter angehoben wird während das Dachteil oder die Dachteile bereits wieder gesenkt werden.

Besonders bevorzugt umfasst das Verdeck zumindest ein zweites Dachteil, wobei auch das zweite Dachteil durch die Dach-Zwangssteuerung öffenbar und schließbar ist. Das Verdeck wird meist zwei Dachteile oder auch mehr umfassen, die alle durch eine gemeinsame um die neuen Dachteile erweiterte Kinematik bewegt werden können, so dass insgesamt nur ein einziger Antrieb erforderlich ist. Wenn das Verdeck mehr als zwei Dachteile umfasst wird auch die Dach-Zwangssteuerung bevorzugt zumindest um jeweils zwei Koppelstangen erweitert.

Bevorzugt sind bei einem Verdeck mit zwei Dachteilen das erste Dachteil und das zweite Dachteil über eine erste Koppelstange gelenkig miteinander verbunden, bevorzugt zusätzlich über eine zweite Koppelstange.

Die erste Koppelstange ist dabei bevorzugt gelenkig mit einem ersten Ende eines ersten Lenkers des Dach-Zweischlaglenkers verbunden, insbesondere in einem mittleren Abschnitt der ersten Koppelstange, wobei zumindest ein Abschnitt der ersten Koppelstange einen zweiten Lenker des Dach-Zweischlaglenkers bildet. Der Dach-Zweischlaglenker kann daher bis zu einem Ende einer Koppelstange verlaufen. Der zweite Lenker des Zweischlaglenkers muss nicht unbedingt als Gerade ausgebildet sein, so dass die Strecklage des Zweischlaglenkers auch nicht notwendigerweise durch den zweiten Lenker des Zweischlaglenkers verlaufen muss, sondern durch eine imaginäre Verbindungslinie zwischen den beiden Gelenken des zweiten Lenkers gegeben sein kann. Analog müssen erfindungsgemäß natürlich auch die weiteren Lenker nicht notwendigerweise als Geraden zwischen ihren Endgelenken ausgebildet sein.

Bevorzugt ist ein Ende der Koppelstange über einen Steuer-Zweischlaglenker mit dem Fahrzeug gelenkig verbunden und sind der Abdeck-Zweischlaglenker und der Steuer-Zweischlaglenker über das Koppelelement gelenkig miteinander verbunden. Die Koppelung kann daher, insbesondere wenn mehrere Dachteile verwendet werden, auch über ein anderes Element, insbesondere einen anderen Zweischlaglenker erfolgen, als über den Dach-Zweischlaglenker, dessen Strecklage den Übergang zum zweiten Öffnungsweg kennzeichnet.

Bevorzugt ist der Abdeck-Zweischlaglenker an einem ersten Ende gelenkig mit einem Traglenker des Abdeckelements gelenkig verbunden, insbesondere in einem mittleren Abschnitt des Traglenkers. Das Abdeckelement sitzt auf dem Traglenker auf, der als Rohrrahmen ausgeführt sein kann.

Bevorzugt ist der Traglenker an einem ersten Ende mit dem Fahrzeug gelenkig verbunden, das heißt insbesondere mit der Karosserie des Fahrzeuges, und an einem zweiten Ende mit dem Abdeckelement verbunden, wobei die Verbindung mit dem Abdeckelement bevorzugt am vorderen Ende des Abdeckelements erfolgt.

Das Abdeckelement kann gemäß einer Ausführungsform im Bereich der Verbindung zum Traglenker gekippt werden, so dass das hintere Ende des Abdeckelements nach oben schwenkt. Hierdurch kann zusätzlich zur Öffnungsbewegung für die Öffnung des Verdecks -bei der das Abdeckelement eine Schwenkbewegung nach hinten ausführen kann - auch eine zweite Öffnungsbewegung als Zugang zu einem Laderaum durchgeführt werden - bei der das Abdeckelement eine Schwenkbewegung nach vorne ausführen kann.

Bevorzugt ist der Abdeck-Zweischlaglenker an einem zweiten Ende mit dem Fahrzeug gelenkig verbunden.

Bevorzugt ist der Abdeck-Zweischlaglenker direkt mit dem Antrieb verbunden, insbesondere im Bereich des zweiten Endes des Abdeck-Zweischlaglenkers, wird also direkt angetrieben.

Bevorzugt ist ein zweites Ende des ersten Lenkers des Dach-Zweischlaglenkers mit dem Fahrzeug gelenkig verbunden.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines erfindungsgemäßen Verdecks im geschlossenen Zustand.
- Fig. 2: ist eine Schnittansicht gem. Fig. 1 in einer ersten Öffnungsphase.
- Fig. 3: ist eine Schnittansicht gem. Fig. 1 in einer zweiten Öffnungsphase.
- Fig. 4: ist eine Schnittansicht gem. Fig. 1 in einer dritten Öffnungsphase (Strecklagen).
- Fig. 5: ist eine Schnittansicht gem. Fig. 1 in einer vierten Öffnungsphase.
- Fig. 6: ist eine Schnittansicht gem. Fig. 1 im geöffneten Zustand.

### Detaillierte Beschreibung der Erfindung

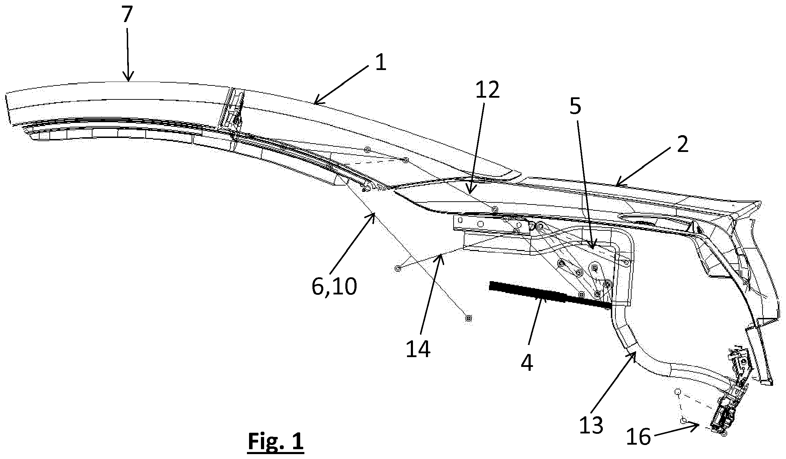

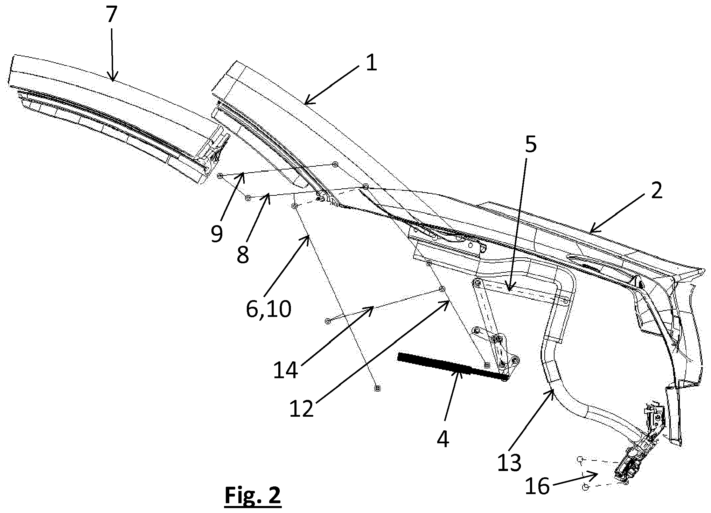

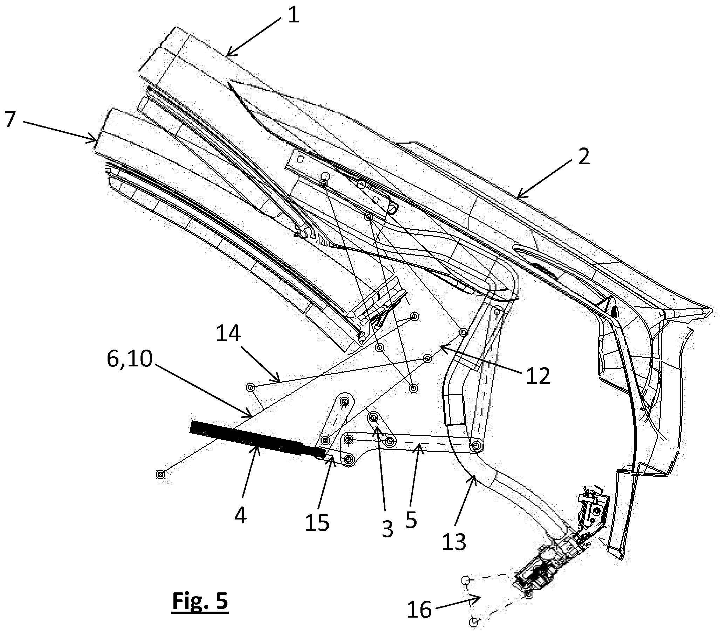

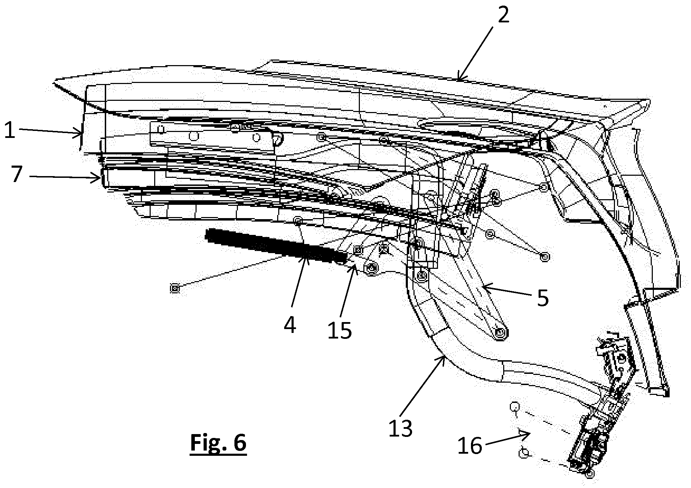

In den Fig. 1-6 ist ein erfindungsgemäßes Verdeck in verschiedenen Zuständen während der Öffnung des Verdecks dargestellt. In Fig. 1 ist das Verdeck noch geschlossen, durchläuft in den Fig. 2 bis 5 verschiedene Öffnungsstadien und ist schließlich in Fig. 6 geöffnet.

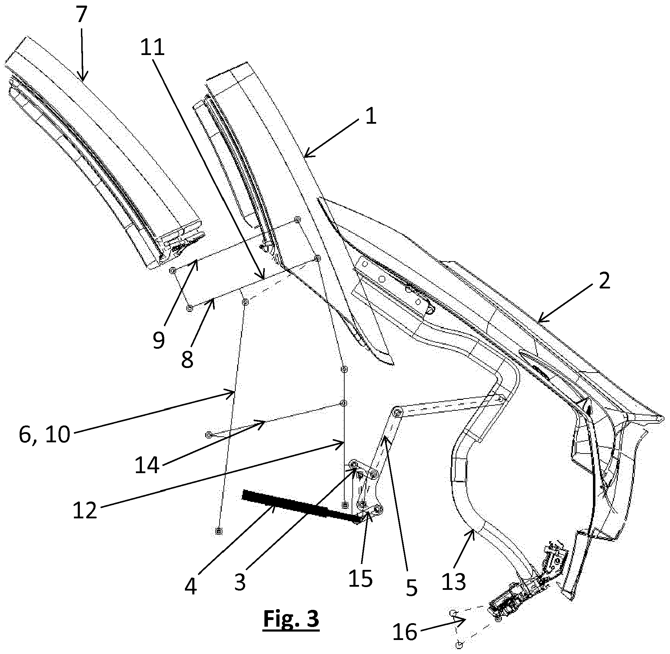

In der Fig. 3 sind alle beschriebenen Bauteile gut sichtbar, daher werden die Bauteile des Verdecks im Folgenden insbesondere mit Bezug auf die Fig. 3 beschrieben.

Das Verdeck wird durch ein in einem Fahrzeug in Fahrtrichtung hinten angeordnetes erstes Dachteil 1 und ein davor angeordnetes zweites Dachteil 7 gebildet. Ein Abdeckelement 2 ist zur Abdeckung der Dachteile 1, 7 bei geöffnetem Verdeck vorgesehen.

Die beiden Dachteile 1, 7 sind über eine Dach-Zwangssteuerung öffenbar und schließbar. Die Dach-Zwangssteuerung umfasst einen Steuer-Zweischlaglenker 12, der mit der Karosserie des Fahrzeugs gelenkig verbunden ist und am anderen Ende mit einem Ende einer Koppelstange 8 gelenkig verbunden ist. Die Koppelstange 8 stellt eine starre Verbindung zwischen den beiden Dachteilen 1 und 7 her. Die beiden Dachteile 1 und 7 sind zudem durch eine zweite Koppelstange 9 miteinander verbunden, so dass die Koppelstangen 8, 9 zusammen mit den Dachteilen 1, 7 ein Viergelenk bilden.

Die erste Koppelstange 8 ist zudem in einem mittleren Abschnitt der ersten Koppelstange 8 gelenkig mit einem ersten Ende eines ersten Lenkers 10 eines Dach-Zweischlaglenkers 6 verbunden. Der Abschnitt der ersten Koppelstange 8 von dieser Verbindung zum ersten Lenker 10 bis zur Anbindung des Steuer-Zweischlaglenkers 12 bildet den zweiten Lenker 11 des Dach-Zweischlaglenkers 6.

Ein zweites Ende des ersten Lenkers 10 des Dach-Zweischlaglenkers 6 ist mit der Karosserie des Fahrzeugs gelenkig verbunden.

Das Abdeckelement 2 ist durch eine Abdeck-Zwangssteuerung öffenbar und schließbar, die einen Abdeck-Zweischlaglenker 5 und einen Traglenker 13 umfasst. Der Abdeck-Zweischlaglenker 5 und der Steuer-Zweischlaglenker 12 sind über ein ebenfalls als Lenker ausgeführtes Koppelelement 3 gelenkig miteinander verbunden.

Der Steuer-Zweischlaglenker 12 und der Dach-Zweischlaglenker 6 sind über eine Hauptkoppel 14 miteinander gelenkig verbunden.

Der Abdeck-Zweischlaglenker 5 ist an einem ersten Ende gelenkig mit einem als Rohrrahmen ausgeführten Traglenker 13 des Abdeckelements 2 gelenkig verbunden. An einem zweiten Ende ist der Abdeck-Zweischlaglenker 5 ist mit der Karosserie des Fahrzeugs gelenkig verbunden. Der Abdeck-Zweischlaglenker 5 ist durch einen Antrieb 4 im Bereich des zweiten Endes des Abdeck-Zweischlaglenkers 5 über ein Antriebsvorgelege 15 antreibbar.

Der Traglenker 13 ist an einem ersten Ende mit der Karosserie des Fahrzeugs gelenkig verbunden und an einem zweiten Ende mit dem Abdeckelement 2, im vorderen Bereich des Abdeckelements 2, verbunden. Die Verbindung des Traglenkers 13 mit dem Fahrzeug erfolgt über eine Anlenkung 16 des Traglenkers 13, die als Drehpunkt, lineare Führung oder auch als Viergelenk ausgeführt sein kann.

Das Abdeckelement 2 ist dadurch über eine Schwenkbewegung des Traglenkers 13 nach hinten (in Fahrtrichtung, das ist in den Fig. nach rechts) mit dem Traglenker 13 nach hinten schwenkbar. Dabei ist das Abdeckelement 2 zum Traglenker 13 im zweiten Ende des Traglenkers 13 fixiert.

Im Bereich der Verbindung zum Traglenker 13 kann das Abdeckelement 2 zudem nach vorne gekippt werden, wenn die Fixierung zwischen Abdeckelement 2 und Traglenker 13 gelöst wird, so dass das hintere Ende des Abdeckelements 2 nach oben schwenken kann. Hierdurch kann ein Zugang zu einem Laderaum freigegeben werden um eine Beladung mit Gepäckstücken zu ermöglichen.

Die Fig. 1 bis 6 stellen schrittweise den Ablauf einer erfindungsgemäßen Dach- und Abdeckelement-Kinematik dar. Fig. 1 zeigt das Verdeck, insbesondere die Dachteile 1, 7 im geschlossenen Zustand. Wie der Ablauf der Figuren zeigt, sind die Abdeck-Zwangssteuerung und die Dach-Zwangssteuerung über das Koppelelement 3 derart gekoppelt, dass ein gemeinsamer und kollisionsfreier Antrieb der beiden Kinematiken möglich wird. Durch die Lage des Koppelelements 3 kann die relative Bewegung zwischen Dach- und Abdeckelement-Kinematik beeinflusst werden.

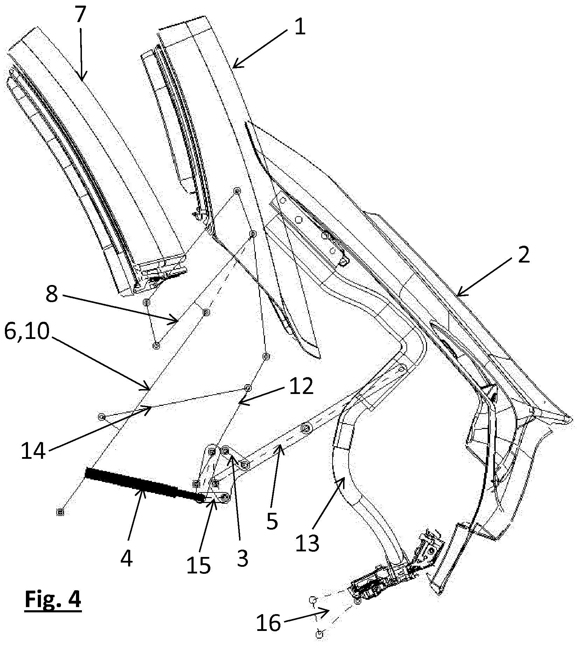

Sowohl die Abdeck-Zwangssteuerung über den Abdeck-Zweischlaglenker 5 als auch die Dach-Zwangssteuerung über den Dach-Zweischlaglenker 6 gehen über eine Strecklage der Zweischlaglenker 5, 6, die in diesem Fall gleichzeitig eintritt und in Fig. 4 dargestellt ist. Die Strecklage des Dach-Zweischlaglenkers 6 ist durch die gestrichelte Linie zum Ende der Koppelstange 8 eingezeichnet. Durch die Wege über die Strecklage hinaus wird eine Richtungsumkehr der beiden Kinematiken ermöglicht und somit eine pendelnde Bewegung beim Öffnen und Schließen erreicht. Das hintere, erste Dachteil 1 wird über dem vorderen, zweiten Dachteil 7 abgelegt. Beide Dachteile 1, 7 werden mit ihrer Oberseite nach oben abgelegt, wodurch eine Ablage mit geringem Bauraumbedarf erreicht wird.

### Bezugszeichenliste

- 1: erstes Dachteil
- 2: Abdeckelement
- 3: Koppelelement
- 4: Antrieb
- 5: Abdeck-Zweischlaglenker
- 6: Dach-Zweischlaglenker
- 7: zweites Dachteil
- 8: erste Koppelstange
- 9: zweite Koppelstange
- 10: erster Lenker des Dach-Zweischlaglenkers
- 11: zweiter Lenker des Dach-Zweischlaglenkers
- 12: Steuer-Zweischlaglenker
- 13: Traglenker
- 14: Hauptkoppel
- 15: Antriebsvorgelege
- 16: Anlenkung Traglenker

## Patentansprüche

1. Verdeck für ein Cabriolet-Fahrzeug, wobei das Verdeck zumindest ein erstes Dachteil (1) und ein Abdeckelement (2) umfasst, wobei das erste Dachteil (1) durch eine Dach-Zwangssteuerung öffenbar und schließbar ist und das Abdeckelement (2) durch eine Abdeck-Zwangssteuerung öffenbar und schließbar ist, wobei die Dach-Zwangssteuerung und die Abdeck-Zwangssteuerung durch ein Koppelelement (3) miteinander gekoppelt sind, so dass die Dach-Zwangssteuerung und die Abdeck-Zwangssteuerung durch einen gemeinsamen Antrieb (4) antreibbar sind, wobei die Dach-Zwangssteuerung und/oder die Abdeck-Zwangssteuerung dazu ausgebildet sind, dass das erste Dachteil (1) und/oder das Abdeckelement (2) beim Öffnen des Verdecks durch den gemeinsamen Antrieb (4) zunächst einen ersten Öffnungsweg zurücklegen wobei das erste Dachteil (1) und/oder das Abdeckelement (2) angehoben werden, und daraufhin einen zweiten Öffnungsweg zurücklegen wobei das erste Dachteil (1) und/oder das Abdeckelement (2) abgesenkt werden,
**dadurch gekennzeichnet, dass** die Abdeck-Zwangssteuerung einen Abdeck-Zweischlaglenker (5) umfasst, wobei der Abdeck-Zweischlaglenker (5) beim Öffnen des Verdecks eine Strecklage durchläuft, wodurch der erste Öffnungsweg in den zweiten Öffnungsweg übergeht.

2. Verdeck nach Anspruch 1,
**dadurch gekennzeichnet, dass** die Dach-Zwangssteuerung einen Dach-Zweischlaglenker (6) umfasst, wobei der Dach-Zweischlaglenker (6) beim Öffnen des Verdecks eine Strecklage durchläuft, wodurch der erste Öffnungsweg in den zweiten Öffnungsweg übergeht.

3. Verdeck nach Anspruch 2,
**dadurch gekennzeichnet, dass** der Abdeck-Zweischlaglenker (5) und der Dach-Zweischlaglenker (6) über das Koppelelement (3) gelenkig miteinander verbunden sind.

4. Verdeck nach Anspruch 2,
**dadurch gekennzeichnet, dass** beim Öffnen des Verdecks der Abdeck-Zweischlaglenker (5) und der Dach-Zweischlaglenker (6) ihre jeweilige Strecklage etwa gleichzeitig durchlaufen.

5. Verdeck nach zumindest einem der vorhergehenden Ansprüche, **dadurch gekennzeichnet, dass** das Verdeck zumindest ein zweites Dachteil (7) umfasst, wobei auch das zweite Dachteil (7) durch die Dach-Zwangssteuerung öffenbar und schließbar ist.

6. Verdeck nach Anspruch 5,
**dadurch gekennzeichnet, dass** das erste Dachteil (1) und das zweite Dachteil (7) über eine erste Koppelstange (8) gelenkig miteinander verbunden sind, bevorzugt zusätzlich über eine zweite Koppelstange (9).

7. Verdeck nach Anspruch 3 und 6,
**dadurch gekennzeichnet, dass** die erste Koppelstange (8) gelenkig mit einem ersten Ende eines ersten Lenkers (10) des Dach-Zweischlaglenkers (6) verbunden ist, insbesondere in einem mittleren Abschnitt der ersten Koppelstange (8), wobei zumindest ein Abschnitt der ersten Koppelstange (8) zumindest einen Abschnitt eines zweiten Lenkers (11) des Dach-Zweischlaglenkers (6) bildet.

8. Verdeck nach den Ansprüchen 2 und 7,
**dadurch gekennzeichnet, dass** ein Ende der Koppelstange (8) über einen Steuer-Zweischlaglenker (12) mit dem Fahrzeug gelenkig verbunden ist und der Abdeck-Zweischlaglenker (5) und der Steuer-Zweischlaglenker (12) über das Koppelelement (3) gelenkig miteinander verbunden sind.

9. Verdeck nach Anspruch 1,
**dadurch gekennzeichnet, dass** der Abdeck-Zweischlaglenker (5) an einem ersten Ende gelenkig mit einem Traglenker (13) des Abdeckelements (2) gelenkig verbunden ist, insbesondere in einem mittleren Abschnitt des Traglenkers (13).

10. Verdeck nach Anspruch 9,
**dadurch gekennzeichnet, dass** der Traglenker (13) an einem ersten Ende mit dem Fahrzeug gelenkig verbunden ist und an einem zweiten Ende mit dem Abdeckelement (2) verbunden ist, wobei die Verbindung mit dem Abdeckelement (2) bevorzugt am vorderen Ende des Abdeckelements (2) erfolgt.

11. Verdeck nach Anspruch 10,
**dadurch gekennzeichnet, dass** das Abdeckelement (2) im Bereich der Verbindung zum Traglenker (13) gekippt werden kann, so dass das hintere Ende des Abdeckelements (2) nach oben schwenkt.

12. Verdeck nach Anspruch 1,
**dadurch gekennzeichnet, dass** der Abdeck-Zweischlaglenker (5) an einem zweiten Ende mit dem Fahrzeug gelenkig verbunden ist.

13. Verdeck nach Anspruch 12,
**dadurch gekennzeichnet, dass** der Abdeck-Zweischlaglenker (5) direkt mit dem Antrieb (4) verbunden ist, insbesondere im Bereich des zweiten Endes des Abdeck-Zweischlaglenkers (5).

14. Verdeck nach Anspruch 7,
**dadurch gekennzeichnet, dass** ein zweites Ende des ersten Lenkers (10) des Dach-Zweischlaglenkers (6) mit dem Fahrzeug gelenkig verbunden ist.

## Claims

1. Hard top for a convertible vehicle, wherein the hard top comprises at least one first roof part (1) and a covering element (2), wherein the first roof part (1) is openable and closable by a roof positive control means, and the covering element (2) is openable and closable by a covering positive control means, wherein the roof positive control means and the covering positive control means are coupled to each other by a coupling element (3), and therefore the roof positive control means and the covering positive control means are drivable by a common drive (4), wherein the roof positive control means and/or the covering positive control means are/is designed such that, during the opening of the hard top by the common drive (4), the first roof part (1) and/or the covering element (2) first of all cover/s a first opening path, in which the first roof part (1) and/or the covering element (2) are/is raised, and then cover/s a second opening path, in which the first roof part (1) and/or the covering element (2) are/is lowered, **characterized in that** the covering positive control means comprises a covering crank-type link (5), wherein, during the opening of the hard top, the covering crank-type link (5) passes through an extended position, as a result of which the first opening path merges into the second opening path.

2. Hard top according to Claim 1, **characterized in that** the roof positive control means comprises a roof crank-type link (6), wherein, during the opening of the hard top, the roof crank-type link (6) passes through an extended position, as a result of which the first opening path merges into the second opening path.

3. Hard top according to Claim 2, **characterized in that** the covering crank-type link (5) and the roof crank-type link (6) are connected to each other in an articulated manner via the coupling element (3).

4. Hard top according to Claim 2, **characterized in that**, during the opening of the hard top, the covering crank-type link (5) and the roof crank-type link (6) pass through their respective extended position approximately simultaneously.

5. Hard top according to at least one of the preceding claims, **characterized in that** the hard top comprises at least one second roof part (7), wherein the second roof part (7) is also openable and closable by means of the roof positive control means.

6. Hard top according to Claim 5, **characterized in that** the first roof part (1) and the second roof part (7) are connected to each other in an articulated manner via a first coupling rod (8), preferably additionally via a second coupling rod (9).

7. Hard top according to Claims 3 and 6, **characterized in that** the first coupling rod (8) is connected in an articulated manner to a first end of a first link (10) of the roof crank-type link (6), in particular in a central portion of the first coupling rod (8), wherein at least one portion of the first coupling rod (8) forms at least one portion of a second link (11) of the roof crank-type link (6).

8. Hard top according to Claims 2 and 7, **characterized in that** one end of the coupling rod (8) is connected in an articulated manner to the vehicle via a control crank-type link (12), and the covering crank-type link (5) and the control crank-type link (12) are connected to each other in an articulated manner via the coupling element (3).

9. Hard top according to Claim 1, **characterized in that** the covering crank-type link (5) is connected at a first end in an articulated manner to a supporting link (13) of the covering element (2), in particular in a central portion of the supporting link (13).

10. Hard top according to Claim 9, **characterized in that** the supporting link (13) is connected at a first end in an articulated manner to the vehicle and is connected at a second end to the covering element (2), wherein the connection to the covering element (2) preferably takes place at the front end of the covering element (2).

11. Hard top according to Claim 10, **characterized in that** the covering element (2) can be tilted in the region of the connection to the supporting link (13), and therefore the rear end of the covering element (2) pivots upwards.

12. Hard top according to Claim 1, **characterized in that** the covering crank-type link (5) is connected at a second end in an articulated manner to the vehicle.

13. Hard top according to Claim 12, **characterized in that** the covering crank-type link (5) is connected directly to the drive (4), in particular in the region of the second end of the covering crank-type link (5).

14. Hard top according to Claim 7, **characterized in that** a second end of the first link (10) of the roof crank-type link (6) is connected in an articulated manner to the vehicle.

## Revendications

1. Capote pour un véhicule cabriolet, la capote comprenant au moins une première partie de toit (1) et un élément de recouvrement (2), la première partie de toit (1) pouvant être ouverte et fermée par une commande forcée de toit et l'élément de recouvrement (2) pouvant être ouvert et fermé par une commande forcée de recouvrement, la commande forcée de toit et la commande forcée de recouvrement étant accouplées l'une à l'autre par un élément d'accouplement (3) de telle sorte que la commande forcée de toit et la commande forcée de recouvrement puissent être entraînées par un entraînement commun (4), la commande forcée de toit et/ou la commande forcée de recouvrement étant réalisées de telle sorte que la première partie de toit (1) et/ou l'élément de recouvrement (2), lors de l'ouverture de la capote, parcourent d'abord une première course d'ouverture par le biais de l'entraînement commun (4), dans laquelle la première partie de toit (1) et/ou l'élément de recouvrement (2) sont soulevés, puis parcourent une deuxième course d'ouverture dans laquelle la première partie de toit (1) et/ou l'élément de recouvrement (2) sont abaissés, **caractérisée en ce que** la commande forcée de recouvrement comprend un bras oscillant de recouvrement à deux coups (5), le bras oscillant de recouvrement à deux coups (5), lors de l'ouverture de la capote, passant par une position étendue de sorte que la première course d'ouverture se poursuive par la deuxième course d'ouverture.

2. Capote selon la revendication 1,
**caractérisée en ce que** la commande forcée de toit comprend un bras oscillant de toit à deux coups (6), le bras oscillant de toit à deux coups (6), lors de l'ouverture de la capote, passant par une position étendue de sorte que la première course d'ouverture se poursuive par la deuxième course d'ouverture.

3. Capote selon la revendication 2,
**caractérisée en ce que** le bras oscillant de recouvrement à deux coups (5) et le bras oscillant de toit à deux coups (6) sont connectés l'un à l'autre de manière articulée par le biais de l'élément d'accouplement (3).

4. Capote selon la revendication 2,
**caractérisée en ce que** le bras oscillant de recouvrement à deux coups (5) et le bras oscillant de toit à deux coups (6) passent par leur position étendue respective approximativement simultanément lors de l'ouverture de la capote.

5. Capote selon au moins l'une quelconque des revendications précédentes,
**caractérisée en ce que** la capote comprend au moins une deuxième partie de toit (7), la deuxième partie de toit (7) pouvant également être ouverte et fermée par le biais de la commande forcée de toit.

6. Capote selon la revendication 5,
**caractérisée en ce que** la première partie de toit (1) et la deuxième partie de toit (7) sont connectées l'une à l'autre de manière articulée par le biais d'une première bielle (8), de préférence en outre par le biais d'une deuxième bielle (9).

7. Capote selon les revendications 3 et 6,
**caractérisée en ce que** la première bielle (8) est connectée de manière articulée à une première extrémité d'un premier bras oscillant (10) du bras oscillant de toit à deux coups (6), en particulier dans une portion centrale de la première bielle (8), au moins une portion de la première bielle (8) formant au moins une portion d'un deuxième bras oscillant (11) du bras oscillant de toit à deux coups (6).

8. Capote selon les revendications 2 et 7, **caractérisée en ce qu'**une extrémité de la bielle (8) est connectée de manière articulée au véhicule par le biais d'un bras oscillant de commande à deux coups (12) et le bras oscillant de recouvrement à deux coups (5) et le bras oscillant de commande à deux coups (12) sont connectés l'un à l'autre de manière articulée par le biais de l'élément d'accouplement (3).

9. Capote selon la revendication 1,
**caractérisée en ce que** le bras oscillant de recouvrement à deux coups (5) est connecté de manière articulée à une première extrémité à un bras oscillant de support (13) de l'élément de recouvrement (2), en particulier dans une portion centrale du bras oscillant de support (13).

10. Capote selon la revendication 9,
**caractérisée en ce que** le bras oscillant de support (13) est connecté de manière articulée au véhicule à une première extrémité et est connecté à l'élément de recouvrement (2) à une deuxième extrémité, la connexion à l'élément de recouvrement (2) s'effectuant de préférence à l'extrémité avant de l'élément de recouvrement (2).

11. Capote selon la revendication 10, **caractérisée en ce que** l'élément de recouvrement (2) peut être basculé par rapport au bras oscillant de support (13) dans la région de la connexion, de telle sorte que l'extrémité arrière de l'élément de recouvrement (2) pivote vers le haut.

12. Capote selon la revendication 1,
**caractérisée en ce que** le bras oscillant de recouvrement à deux coups (5) est connecté de manière articulée au véhicule au niveau d'une deuxième extrémité.

13. Capote selon la revendication 12,
**caractérisée en ce que** le bras oscillant de recouvrement à deux coups (5) est directement connecté à l'entraînement (4), en particulier dans la région de la deuxième extrémité du bras oscillant de recouvrement à deux coups (5).

14. Capote selon la revendication 7,
**caractérisée en ce qu'**une deuxième extrémité du premier bras oscillant (10) du bras oscillant de toit à deux coups (6) est connectée de manière articulée au véhicule.
